# EUROPÄISCHE PATENTSCHRIFT

(11) **EP 2 845 310 B1**
(45) Veröffentlichungstag und Bekanntmachung des Hinweises auf die Patenterteilung: **07.09.2016**
(21) Anmeldenummer: 13724196.4
(22) Anmeldetag: 08.05.2013
(51) Int. Cl.: H02P 6/10, H02J 3/18, H02P 23/04

(54) **REGELEINRICHTUNG ZUR BESEITIGUNG VON STÖRUNGEN IM NETZ**
CONTROL DEVICE FOR ELIMINATING MALFUNCTIONS IN A NETWORK
DISPOSITIF DE RÉGULATION POUR LA SUPPRESSION D'INTERFÉRENCES DANS UN RÉSEAU

(30) Priorität: 04.06.2012 DE 102012209369
(43) Veröffentlichungstag der Anmeldung: 11.03.2015
(73) Patentinhaber: Siemens Aktiengesellschaft, 80333 München (DE)
(72) Erfinder: BRUNOTTE, Christoph, 91056 Erlangen (DE)
(86) Internationale Anmeldenummer: PCT/EP2013/059585
(87) Internationale Veröffentlichungsnummer: WO 2013/182368

(56) Entgegenhaltungen:
- WO-A1-2011/105355
- JP-A- 2009 296 752
- US-A1- 2010 308 757

## Beschreibung

Die Erfindung betrifft eine Regeleinrichtung zur Reduzierung von elektrischen Störungen in einem Netz, die durch Momentenschwankungen eines Elektromotors hervorgerufenen werden, insbesondere von Flicker. Die Erfindung betrifft weiter ein System mit einer derartigen Regeleinrichtung sowie ein Verfahren zur Reduzierung von durch Momentenschwankungen eines Elektromotors hervorgerufenen elektrischen Störungen, insbesondere von Flicker, in einem Netz mittels einer derartigen Regeleinrichtung.

Eine Ursache für Störungen im Netz wie beispielsweise Flicker sind Momentenschwankungen von Antriebseinrichtungen, die mit dem Netz elektrisch verbunden sind. Bei einer Antriebseinrichtung ist ein Elektromotor, der über einen Umrichter gespeist wird, mit einer mechanischen Last oder mit einer mechanischen Quelle gekoppelt. Störungen können entstehen, wenn die mechanische Last, zum Beispiel ein Kolbenkompressor, oder die mechanische Quelle, wie beispielsweise eine Verbrennungsmaschine, einen schwankenden Momentverlauf aufweist. Dieser führt zu Schwankungen im Netzstrom, die dann Störungen im Netz verursachen können. Der Elektromotor kann sowohl motorisch betrieben werden, so dass er elektrische Energie in mechanische Energie umwandelt, um damit eine Last anzutreiben, als auch generatorisch betrieben werden wenn er mechanische Energie in elektrische Energie umwandelt, um damit elektrische Energie zu generieren. Der Umrichter dient dazu, den Energiefluss zu steuern. Zum Umrichter gehört eine Umrichterregelung, unter anderem zur Aufnahme von Sollwertsignalen. Diese kann sich in unmittelbarer Nähe, insbesondere in einem gemeinsamen Schaltschrank mit dem Umrichter befinden oder räumlich getrennt angeordnet sein. Eine ungleichmäßige mechanische Belastung an der Motorwelle, die beispielsweise durch den Betrieb eines Kolbenkompressors hervorgerufen wird, führt zu einer ungleichmäßigen elektrischen Belastung des Netzes, was sich in Form von Netzstörungen wie beispielsweise Flicker äußern kann. Die ungleichmäßige mechanische Belastung des Elektromotors kann dadurch abgepuffert und reduziert werden, dass eine große Schwungmasse auf der Motorwelle eingesetzt wird. Sie verringert die störenden Auswirkungen auf die elektrische Seite des Elektromotors. Allerdings erhöht die Schwungmasse das Bauvolumen, das Gewicht und damit auch die Kosten der Motoreinheit teilweise sogar deutlich.

Aus der JP 2009 296752A ist eine Vorrichtung zur Beseitigung von Drehmomentschwankungen bekannt, die von einem Motor erzeugt werden. Dazu wird das Drehmoment gemessen und einer Regelung zugeführt.

Aus der US2010/308757A1 ist eine AC Motor Regelungsvorrichtung bekannt, die einen Umrichter, einen Stromaufteiler, einen Stromregler, einen Drehmomentabweichungsberechner und einen Phasenwinkelerzeuger aufweist. Die Umrichtereinheit ist dazu ausgelegt, eine Steuerspannung an den AC Motor zu übertragen. Der Stromaufteiler ist dazu ausgelegt, einen Strom in Komponenten eines Steuerstroms umzuwandeln. Der Stromregler ist dazu ausgelegt den Strom derart zu regeln, dass ein Strom durch den Motor erreicht wird. Der Drehmomentabweichungsberechner ist dazu ausgelegt, die Drehmomentabweichung zu bestimmen. Der Phasenwinkelerzeuger ist dazu ausgelegt einen Phasenwinkel in Abhängigkeit von einer Drehmomentabweichung zu erzeugen.

Der Erfindung liegt die Aufgabe zugrunde, elektrische Störungen, die sich aus Momentenschwankungen beim Betrieb einer Last oder einer Quelle an einem Elektromotor, der über einen mit dem Netz verbundenen Umrichter elektrisch gespeist wird, auf einfache und kostengünstige Weise zu minimieren bzw. idealerweise zu beseitigen.

Diese Aufgabe wird durch ein Verfahren zur Beseitigung von elektrischen Störungen, insbesondere Flicker, in einem Netz mittels einer Regeleinrichtung mit den Merkmalen des Anspruchs 1 gelöst.

Diese Aufgabe wird weiter durch eine Regeleinrichtung mit den Merkmalen des Anspruchs 3 sowie durch ein System mit den Merkmalen des Anspruchs 4gelöst.

Der Erfindung liegt die Erkenntnis zu Grunde, dass sich Störungen im Netz durch die Verarbeitung von Informationen über die Belastung des Netzes durch Momentenschwankungen auf überraschend einfache Weise minimieren bzw. sogar beseitigen lassen.

Dabei greift die Regeleinrichtung in das Zusammenwirken von mechanischer Energie und elektrischer Energie ein, wobei in dieser Anordnung der Umrichter als Stellglied dient. Hierzu erhält die Regeleinrichtung als Eingangsgröße entsprechende Informationen über die Belastung des Netzes. Um dieser Belastung des Netzes entgegenzuwirken, wird in Abhängigkeit vom Eingangssignal ein entsprechendes Ausgangssignal generiert und an den Umrichter als Stellglied übertragen. Der Hauptvorteil einer solchen Regelung ist es, dass Schwungmassen beseitigt oder zumindest reduziert werden können. Neben geringerem Gewicht und geringeren Kosten kann somit gleichzeitig eine hohe Dynamik des Antriebs erreicht werden.

Vorteilhafte Ausgestaltungen der Erfindung sind in den abhängigen Ansprüchen angegeben.

Bei einer vorteilhaften Ausgestaltungsform enthält das Eingangssignal Informationen zur von mindestens einem Elektromotor aus dem Netz aufgenommenen oder eingespeisten elektrischen Leistung oder zu den am Elektromotor anliegenden Strömen und/oder Spannungen. Diese Größen sind besonders geeignet, die Belastung des Netzes durch Momentenschwankungen zu ermitteln. Die Ermittlung kann beispielsweise durch Berechnungen oder Abschätzungen erfolgen. Ein Vorteil dieser Größen ist, dass diese relativ einfach durch geeignete Messeinrichtungen verfügbar gemacht werden können. Besonders vorteilhaft ist diese Ausgestaltungsform, wenn entsprechende Messeinrichtungen bereits für andere Regel-, Steuerungs- oder Überwachungsaufgaben im System vorhanden sind, so dass die entsprechenden Größen einfach der Regeleinrichtung zugeführt werden können.

Bei einer weiteren vorteilhaften Ausgestaltung weist die Regeleinrichtung mindestens einen weiteren Eingang zur Zuführung eines weiteren Eingangssignals auf, welches vom Elektromotor abgeleitete mechanische Informationen insbesondere zur Drehzahl und/oder zum Rotorwinkel enthält. Aus dieser Information lässt sich ein Zusammenhang zwischen der Belastung des Netzes und dem Rotorwinkel gewinnen. Dieser Zusammenhang kann dann dazu genutzt werden, die Regelung frequenzselektiv wirken zu lassen. Dies hat unter anderen den großen Vorteil, dass die Stelldynamik für die Frequenzanteile genutzt werden, mit denen am wirkungsvollsten gegen die Störung vorgegangen werden kann.

Bei einer weiteren vorteilhaften Ausgestaltung weist die Regelung Mittel zur Frequenzanalyse auf, welche zur Verarbeitung der Eingangssignale vorgesehen sind. Dies hat unter anderen den großen Vorteil, dass die Stelldynamik für diejenigen Frequenzanteile genutzt wird, mit denen am wirkungsvollsten gegen die Störung vorgegangen werden kann.

Bei einer weiteren vorteilhaften Ausgestaltung enthält das Ausgangssignal Informationen zum Sollmoment und/oder zu den Spannungen des Umrichters. Vorteil dieser Ausgestaltung ist, dass die Regeleinrichtung einfach an die Umrichterregelung angebunden werden kann, da die Umrichterregelung oftmals einen Eingang für einen Momentensollwert aufweist. Der Vorteil der Spannungsausgänge besteht darin, unterschiedlich vorhandene Regelkreise getrennt aufzubauen, um diese auch getrennt optimieren zu können. Dabei nutzt beispielsweise eine Drehzahlregelung den Eingang der Umrichterregelung für den Momentensollwert, während die Regeleinrichtung zur Reduzierung von Störungen im Netz sich auf die Spannungen des Umrichters auswirkt. Damit ist eine Trennung der Regelaufgaben möglich und die einzelnen Aufgaben können jeweils getrennt optimiert werden.

Bei einer weiteren vorteilhaften Ausgestaltung weist das System zur Beseitigung von Störungen im Netz einen Motorregler auf. Vorteil dieser Anordnung ist, dass auch bestehende Regelsysteme mit Motorregler, beispielsweise mit dem Ziel die Drehzahl zu regeln, um eine erfindungsgemäße Regeleinrichtung erweitert werden können, um Störungen, die durch die Momentenschwankungen hervorgerufen werden, zu beseitigen. Diese Erweiterung um eine Regeleinrichtung zur Beseitigung von Störungen kann gegebenenfalls auch nachträglich erfolgen.

Bei einer weiteren vorteilhaften Ausgestaltung weist das System eine Koppeleinheit zur Kopplung des Ausgangssignals der Regeleinrichtung und des Ausgangssignals des Motorreglers auf. Vorteil dieser Ausgestaltungsform ist es, die Regeleinrichtung möglichst einfach in ein entsprechendes System, gegebenenfalls auch in ein bestehendes System, zu integrieren. Vorhandene Ausgänge eines Motorreglers werden auf einfache Weise mit den Ausgängen der Regeleinrichtung über die Koppeleinheit verkoppelt, um diese dann der Umrichterregelung zuzuführen. Insbesondere für nachträgliche Erweiterungen des Systems um eine Regeleinrichtung zur Reduzierung von Störungen im Netz wird hierdurch eine einfache Integration ermöglicht. Die Umrichterregelung muss bei dieser Erweiterung nicht um weitere Eingänge ergänzt werden.

Bei einer weiteren vorteilhaften Ausgestaltung wird ein Hochpassfilter zur Filterung des Eingangssignals der elektrischen Leistung verwendet. Dieses stellt unter anderem sicher, dass Änderungen eines Drehzahlsollwertes nicht von dem Regler als Störung interpretiert werden. Damit wird eine Wechselwirkung unterschiedlicher Regelkreise weitestgehend vermieden. Des Weiteren werden niederfrequente Anteile des Moments am Elektromotor aus der Berechnung des Stellsignals für die Störungsreduzierung ferngehalten. Diese Anteile könnten gegebenenfalls Ungenauigkeiten bei der Ermittlung des Ausgangssignals hervorrufen. Vorteil dieser Ausgestaltung ist eine höhere Genauigkeit bei der Ermittlung des Stellsignals der Regelung.

Bei einer weiteren vorteilhaften Ausgestaltung werden die Regeleinrichtung, der Motorregler, die Umrichterregelung, das Hochpassfilter und/oder die Koppeleinheit gesamt oder in Teilen zu einer Gesamtregeleinheit zusammenfasst. Da die unterschiedlichen Regelungsaufgaben durch unterschiedliche Softwareanteile auf der gleichen Hardwareeinheit aufgesetzt werden können, ergibt sich durch diese Zusammenlegung eine Reduktion an Hardwareaufwand und damit eine teils deutliche Reduktion der Kosten.

Im Folgenden wird die Erfindung anhand der in den Figuren dargestellten Ausführungsbeispiele näher beschrieben und erläutert. Es zeigen:
- FIG 1: ein erstes Blockschaltbild eines Systems mit einem über einen Umrichter gespeisten Elektromotor und einer Regeleinrichtung,
- FIG 2: ein weiteres Blockschaltbild eines Systems entsprechend FIG 1, erweitert um einen Motorregler und einen weiteren Eingang für die Regeleinrichtung,
- FIG 3: ein weiteres Blockschaltbild eines Systems wie in FIG 2, erweitert um Koppeleinheit, Hochpassfilter und Mittel zur Frequenzanalyse,
- FIG 4: ein weiteres Blockschaltbild eines Systems entsprechend FIG 3, bei dem Teile der Regelung zu einer Gesamtregelung zusammengefasst sind und
- FIG 5: ein Gesamtblockschaltbild eines erfindungsgemäßen Systems.

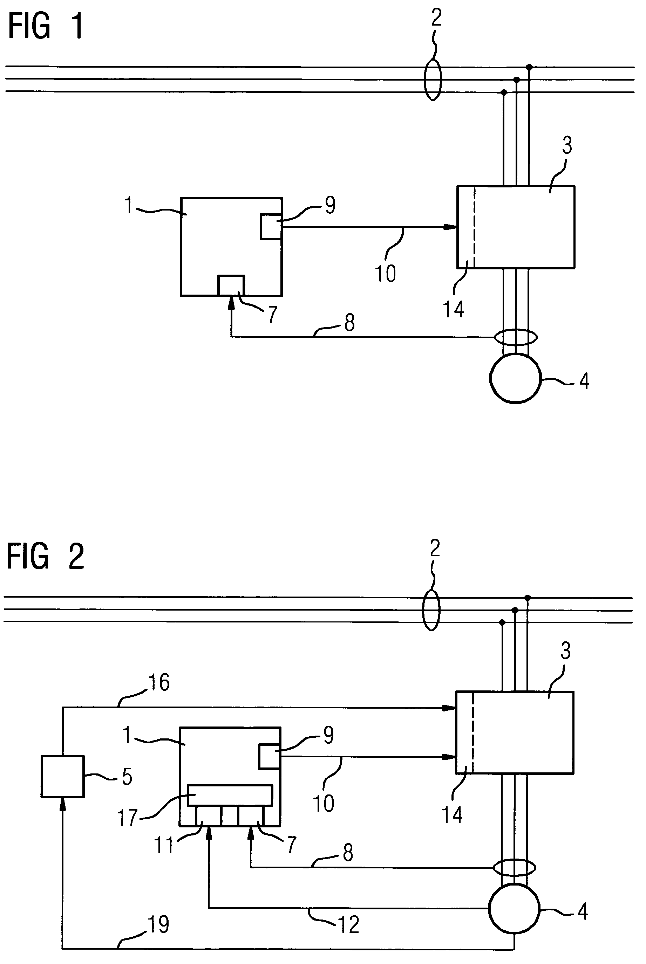

FIG 1 zeigt ein erstes Blockschaltbild eines Systems mit einem über einen Umrichter 3 gespeisten Elektromotor 4 und einer Regeleinrichtung 1. Zu den Hauptbestandteilen des Systems gehören ein Netz 2, zum Austausch von elektrischer Energie, ein Umrichter 3, der einen Elektromotor 4 speist, sowie eine Regeleinrichtung 1. Eine Umrichterregelung 14 ist ein funktionaler Teil des Umrichters 3. Um Störungen im Netz 2, die durch Momentenschwankungen am Elektromotor 4 entstehen, zu reduzieren oder zu beseitigen, wird ein Eingangssignal 8 an einen Eingang 7 der Regeleinrichtung 1 übermittelt, mit dem sich die Belastung des Netzes 2 aufgrund von Momentenschwankungen des Elektromotors 4 bestimmen lässt. Die Regeleinrichtung 1 generiert dazu ein Ausgangssignal 10 am Ausgang 9 der Regeleinrichtung 1, das geeignet ist, mit Hilfe des Umrichters 3 den Störungen entgegenzuwirken. Dieses Ausgangssignal 10 wird der Umrichterregelung 14 des Umrichters 3 zugeführt.

FIG 2 zeigt ein weiteres Blockschaltbild eines Systems entsprechend FIG 1, erweitert um einen Motorregler 5 und einen weiteren Eingang 11 für die Zuführung eines weiteren Eingangssignals 12 für die Regeleinrichtung 1. Dabei sind auch Ausgestaltungsformen realisierbar, die nur eines dieser beiden Elemente als Erweiterung beinhalten. Bezüglich der sonstigen Bestandteile des Systems wird auf die Beschreibung zu FIG 1 und auf die dort eingeführten Bezugszeichen verwiesen.

Die Regeleinrichtung 1 bekommt an einem weiteren Eingang 11 ein Eingangssignal 12 zugeführt, das Informationen zur Drehzahl und/oder zum Rotorwinkel des Elektromotors 4 enthält. Die in der Regeleinrichtung 1 enthaltenen Mittel 17 zur Frequenzanalyse können auf Basis des weiteren Eingangssignals 12 das Eingangssignal 8 in verschiedene Frequenzanteile zerlegen. Das weitere Eingangssignal 12 trägt dazu bei, die relevanten Frequenzen für die Frequenzanalyse zu bestimmen. Diese sind insbesondere die Grundschwingung, die der mechanischen Motorfrequenz entspricht sowie die entsprechenden Oberschwingungen. Der Ausgang 9 der Regeleinrichtung 1 übermittelt ein Ausgangssignal 10 an die Umrichterregelung 14, das nur eine beschränkte Anzahl an Frequenzen enthält. Selbst nur mit Anteilen aus der Grundschwingung können bereits zufriedenstellende Regelergebnisse erzielt werden. Jeder weitere Frequenzanteil verbessert das Regelverhalten. Damit wird die Stelldynamik für die Frequenzen genutzt, mit denen der Umrichter am wirkungsvollsten gegen die Störung vorgehen kann. Der Motorregler 5 dient dazu, den betrieblichen Arbeitspunkt wie beispielsweise eine Drehzahl des Elektromotors 4 einzustellen. Dazu benötigt der Motorregler 5 ein Eingangssignal 19 vom Elektromotor 4, in diesem Beispiel ein Drehzahlsignal. Als Ausgangssignal 16 stellt der Motorregler 5 dem Umrichter 3 einen Sollwert zur Verfügung, um den Elektromotor 4 auf den vorgesehenen Arbeitspunkt zu regeln.

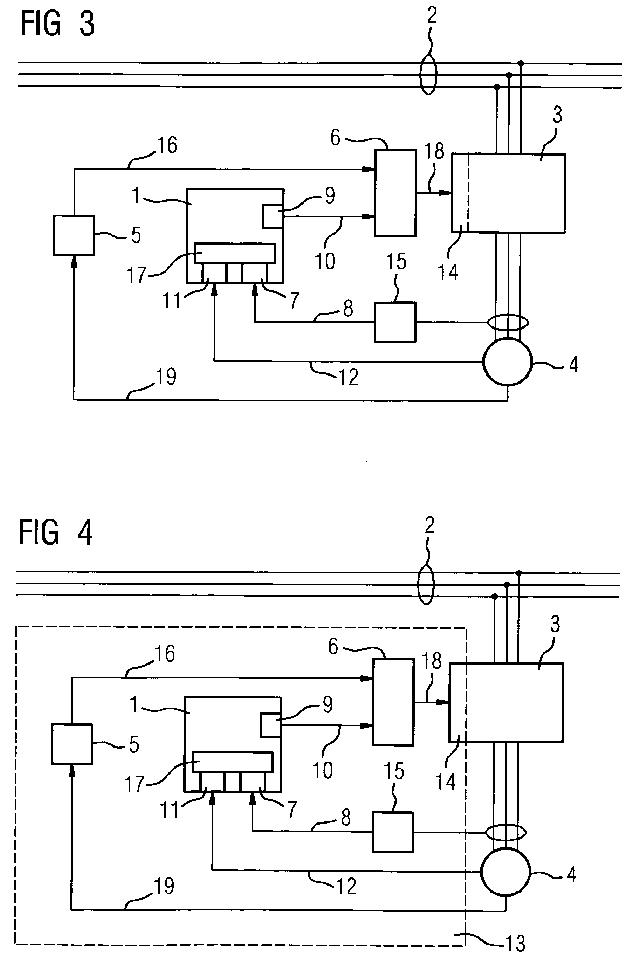

FIG 3 zeigt ein weiteres Blockschaltbild eines Systems entsprechend FIG 1 und FIG 2, so dass zur Vermeidung von Wiederholungen bezüglich übereinstimmender Bestandteile des Systems auf die Beschreibungen zu FIG 1 und FIG 2 und die dort eingeführten Bezugszeichen verwiesen wird. FIG 3 enthält zur weiteren Optimierung des Regelverhaltens noch ein Hochpassfilter 15 zur Bearbeitung des Eingangssignals 8 sowie eine Koppeleinheit 6. Dabei sind auch Ausgestaltungsformen realisierbar, die eines dieser beiden Elemente als Erweiterung beinhalten.

Die Koppeleinheit 6 verknüpft das Ausgangssignal 10 der Regeleinrichtung 1 und das Ausgangssignal 16 des Motorreglers 5 miteinander und erzeugt ein Ausgangssignal 18 der Koppeleinheit 6, welches der Umrichterregelung 14 des Umrichters 3 zur Steuerung des Elektromotors 4 übermittelt wird. Für das System ergibt sich der Vorteil, dass die Umrichterregelung 14 wieder nur ein Signal aufnehmen muss. Eine Erweiterung auf einen zweiten Eingang für die Umrichterregelung 14 kann vermieden werden, so dass sich auch gerade bestehende Systeme um eine Regeleinrichtung zur Beseitigung von Störungen im Netz erweitern lassen. Das Hochpassfilter 15 dient dazu, das Eingangssignal 8 der Regeleinrichtung 1 vor Zuführung in die Regeleinrichtung 1 zu bearbeiten. Dabei werden die niederfrequenten Anteile aus dem Signal entfernt. Dies stellt unter anderem sicher, dass Regelaufgaben des Motorreglers, wie beispielsweise die beabsichtigte Änderung der Drehzahl, von der Regeleinrichtung 1 nicht als Störung interpretiert werden. Dadurch wird eine Wechselwirkung der unterschiedlichen Regelkreise weitestgehend vermieden. Es verbleiben dann die Störungen verursachenden Anteile im Eingangssignal 8. Damit kann die Bestimmung des Ausgangssignals 10 der Regeleinrichtung 1 einfacher, aufwandsärmer und präziser durchgeführt werden.

FIG 4 zeigt ein weiteres Blockschaltbild eines Systems entsprechend den FIG 1, FIG 2 und FIG 3, so dass zur Vermeidung von Wiederholungen bezüglich übereinstimmender Bestandteile des Systems wiederum auf die Beschreibungen zu den FIG 1 bis FIG 3 und die dort eingeführten Bezugszeichen verwiesen wird. Die Besonderheit des Ausführungsbeispiels von FIG 4 besteht darin, dass die Regelungskomponenten des Systems, wie Regeleinrichtung 1, Umrichterregelung 14, Motorregler 5, Hochpassfilter 15 sowie Koppeleinheit 6 zu einer Gesamtregeleinheit 13 zusammengefasst sind. Die verschiedenen Komponenten sind oftmals lediglich unterschiedliche Softwareroutinen, die jedoch auf derselben Regelungshardware zur Ausführung kommen können. Somit sind nicht zwingend unterschiedliche Hardwareeinheiten für die einzelnen Regelungskomponenten notwendig. Die Zusammenlegung der unterschiedlichen Softwareroutinen auf eine Hardwareeinheit führt in vielen Fällen zu einer Verringerung der Kosten.

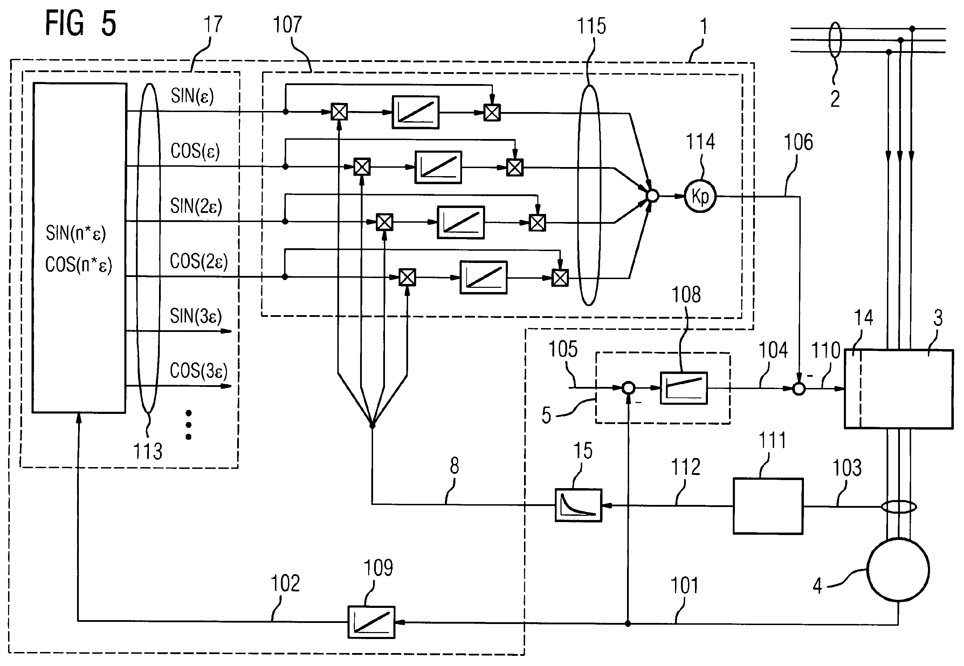

FIG 5 zeigt ein weiteres Ausführungsbeispiel eines erfindungsgemäßen Systems. Dabei speist ein mit dem Netz 2 verbundener Umrichter 3 einen Elektromotor 4. Zur Regelung einer Motordrehzahl wird ein Motorregler 5 verwendet, der als Eingangsgrößen als Istwert ein Drehzahlsignal 101 vom Elektromotor 4 und als Sollwert einen Drehzahlsollwert 105 erhält. Innerhalb des Motorreglers 5 wird aus den beiden zugeführten Werten die Differenz gebildet und einem Drehzahlregler 108, beispielsweise einem PI Regler, zugeführt. Der Drehzahlregler 108 generiert einen Drehmomentensollwert 104, der dann gleichzeitig das Ausgangssignal 16 des Motorreglers darstellt. Wie bereits im Zusammenhang mit den FIG 1 bis FIG 4 gezeigt und erläutert ist zur Unterdrückung der Störungen im Netz 2 zusätzlich zum Motorregler 5 eine Regeleinrichtung 1 vorhanden. Aus Informationen 103 am Elektromotor 4, insbesondere aus Spannung(en) und Strom bzw. Strömen wird über Mittel 111 zur Leistungsbestimmung ein Leistungssignal 112 generiert. Ein Hochpassfilter 15 entfernt den niederfrequenten Anteil damit das Eingangssignal 8 der Regeleinrichtung 1 nur noch die im Netz 2 Störungen verursachenden Leistungsanteile enthält. Dies stellt unter anderem sicher, dass Regelaufgaben des Motorreglers 5, wie beispielsweise die Änderung der Drehzahl, von der Regeleinrichtung 1 nicht als Störung interpretiert werden. Dadurch wird eine Wechselwirkung verschiedener Regelkreise weitestgehend vermieden. Innerhalb der Regeleinrichtung 1 wird das Eingangssignal 8 einem Pendelleistungsregler 107 zugeführt. Um eine Frequenzanalyse durchführen zu können, die sich auf die Grundschwingung sowie Oberschwingungen der mechanischen Motorfrequenz bezieht, wird aus dem Drehzahlsignal 101 mithilfe eines Integrators 109 der mechanische Rotorwinkel 102 gebildet und dem Mittel 17 zur Frequenzanalyse zugeführt. Dieses generiert Hilfssignale 113 zur Frequenzanalyse, die aus sin- und cos-Werten vom mechanischen Rotorwinkels 102 und seinen Vielfachen gebildet werden. Prinzipiell können beliebig viele Harmonische für die frequenzselektive Regelung herangezogen werden. Hinreichend gute Regelergebnisse werden bereits für die Grundschwingung erzielt. FIG 5 zeigt die zusätzliche Verwendung der 1. Oberschwingung, was sich ebenfalls als zweckmäßig erwiesen hat. Die einzelnen Hilfssignale 113 zur Frequenzanalyse werden in dem Pendelleistungsregler 107 jeweils mit dem Eingangssignal 8 multipliziert, anschließend integriert um danach wieder mit den jeweils gleichen Hilfssignalen 113 zur Frequenzanalyse wie zuvor multipliziert zu werden. Das Ergebnis sind einzelne Zusatzmomentenanteile 115, deren Summe einem Proportionalglied 114 zugeführt wird, das durch die Multiplikation mit einem konstanten Faktor das Regelverhalten optimiert. Das sich daraus ergebene Ausgangssignal ist der Zusatzmomentensollwert 106, das dem Ausgangssignal 10 der Regeleinrichtung 1 entspricht. Der Zusatzmomentensollwert 106 wird dem Sollmoment 104 negativ überlagert und als Gesamtsollmoment 110 der Umrichterregelung 14 zugeführt.

## Patentansprüche

1. Verfahren zur Beseitigung von elektrischen Störungen, insbesondere Flicker, in einem Netz (2) mittels einer Regeleinrichtung (1), wobei ein mit dem Netz (2) verbundener Umrichter (3) einen Elektromotor (4) speist,
wobei die Regeleinrichtung (1) aufweist
- mindestens einen ersten Eingang (7) zur Zuführung eines Eingangssignals (8),
- mindestens einen weiteren Eingang (11) zur Zuführung eines weiteren Eingangssignals (12), welches vom Elektromotor (4) abgeleitete mechanische Informationen insbesondere zur Drehzahl und/oder zum Rotorwinkel enthält und
- mindestens einen Ausgang (9) zur Ausgabe eines Ausgangssignals (10) an den den Elektromotor (4) speisenden Umrichter (3)
wobei die Regelung der Regeleinrichtung (1) aus dem Eingangssignal (8) mindestens ein Ausgangssignal (10) generiert und dem den Elektromotor (4) speisenden Umrichter (3) zur Verfügung stellt,
wobei das Eingangssignal (8) aus einem Leistungssignals (112) gebildet wird, wobei aus Informationen (103) am Elektromotor (4) über Mittel (111) zur Leistungsbestimmung das Leistungssignal (112) generiert wird und bei dem mittels eines Hochpassfilters (15) die niederfrequenten Anteile entfernt werden,
wobei das weitere Eingangssignal (12) ein Drehzahlsignal (101) darstellt, aus dem mithilfe eines Integrators (109) der mechanische Rotorwinkel (102) gebildet wird und dem Mittel (17) zur Frequenzanalyse zugeführt wird,
wobei zur Bildung von Zusatzmomentenanteile (115) Hilfssignale (113) zur Frequenzanalyse jeweils mit dem Eingangssignal (8) multipliziert, anschließend integriert um danach wieder mit den jeweils gleichen Hilfssignalen (113) wie zuvor multipliziert zu werden,
wobei die Hilfssignale (113) aus sin- und cos-Werten vom mechanischen Rotorwinkel (102) und seinen Vielfachen gebildet werden,
wobei die Summe der Zusatzmomentenanteile einem Proportionalglied (114) zugeführt wird woraus sich ein Zusatzmomentensollwert (106) ergibt,
wobei der Zusatzmomentensollwert (106) dem Ausgangssignal (10) der Regeleinrichtung (1) entspricht,
wobei der Zusatzmomentensollwert (106) einem Sollmoment (104) negativ überlagert wird und als Gesamtsollmoment (110) einer Umrichterregelung (14) eines Umrichters (3) zugeführt wird.

2. Verfahren nach Anspruch 1,
**dadurch gekennzeichnet, dass** zur Regelung einer Motordrehzahl ein Motorregler (5) verwendet wird, der als Eingangsgrößen als Istwert das Drehzahlsignal (101) vom Elektromotor (4) und als Sollwert einen Drehzahlsollwert (105) erhält, wobei der Motorregler (5) als Ausgangssignal den Drehmomentensollwert (104) generiert.

3. Regeleinrichtung (1) zur Durchführung des Verfahrens nach Anspruch 1 oder 2 zur Reduzierung von elektrischen Störungen in einem Netz (2), die durch Momentenschwankungen mindestens eines Elektromotors (4) hervorgerufen werden, wobei die Regeleinrichtung (1)
- mindestens einen ersten Eingang (7) zur Zuführung eines Eingangssignals (8),
- mindestens einen weiteren Eingang (11) zur Zuführung eines weiteren Eingangssignals (12), welches vom Elektromotor (4) abgeleitete mechanische Informationen insbesondere zur Drehzahl und/oder zum Rotorwinkel enthält
und
- mindestens einen Ausgang (9) zur Ausgabe eines Ausgangssignals (10) an den den Elektromotor (4) speisenden Umrichter (3)
aufweist,
wobei mittels der Regelung der Regeleinrichtung (1) aus dem Eingangssignal (8) mindestens ein Ausgangssignal (10) generierbar und dem den Elektromotor (4) speisenden Umrichter (3) zur Verfügung stellbar ist,
wobei das Eingangssignal (8) aus einem Leistungssignal (112) bildbar ist, wobei aus Informationen (103) am Elektromotor (4) über Mittel (111) zur Leistungsbestimmung das Leistungssignal (112) generierbar ist und bei dem mittels eines Hochpassfilters (15) die niederfrequenten Anteile entfernbar sind,
wobei das weitere Eingangssignal (12) ein Drehzahlsignal (101) darstellt, aus dem mithilfe eines Integrators (109) der mechanische Rotorwinkel (102) bildbar ist und dem Mittel (17) zur Frequenzanalyse zuführbar ist,
wobei zur Bildung von Zusatzmomentenanteile (115) Hilfssignale (113) zur Frequenzanalyse jeweils mit dem Eingangssignal (8) multiplizierbar, anschließend integrierbar sind, um danach wieder mit den jeweils gleichen Hilfssignalen (113) wie zuvor multiplizierbar zu sein, wobei die Hilfssignale (113) aus sin- und cos-Werten vom mechanischen Rotorwinkel (102) und seinen Vielfachen bildbar sind,
wobei die Summe der Zusatzmomentenanteile einem Proportionalglied (114) derart zuführbar ist, dass sich ein Zusatzmomentensollwert (106) ergibt,
wobei der Zusatzmomentensollwert (106) dem Ausgangssignal (10) der Regeleinrichtung (1) entspricht,
wobei der Zusatzmomentensollwert (106) einem Sollmoment (104) negativ überlagerbar ist und als Gesamtsollmoment (110) einer Umrichterregelung (14) eines Umrichters (3) zugeführbar ist.

4. System mit mindestens einem von einem Umrichter (3) gespeisten Elektromotor (4) und mit mindestens einer Regeleinrichtung (1) nach Anspruch 3.

5. System nach Anspruch 4,
**dadurch gekennzeichnet, dass** das System mindestens einen Motorregler (5) aufweist.

## Claims

1. Method for eliminating electrical malfunctions, in particular flicker, in a network (2) by means of a control device (1), wherein a converter (3) connected to the network (2) supplies an electric motor (4),
wherein the control device comprises
- at least one first input (7) for supplying an input signal (8),
- at least one further input (11) for supplying a further input signal (12) which contains mechanical information derived from the electric motor (4), in particular regarding the rotary speed and/or the rotor angle,
and
- at least one output (9) for outputting an output signal (10) to the converter (3) supplying the electric motor (4)
wherein the control system of the control device (1) generates at least one output signal (10) from the input signal (8) and makes said signal available to the converter (3) supplying the electric motor (4),
wherein the input signal (8) is formed from a power signal (112), wherein the power signal (112) is generated from information (103) at the electric motor (4) through means (111) for power determination and wherein by means of a highpass filter (15), the low frequency components are removed, wherein the further input signal (12) represents a rotary speed signal (101) from which, with the aid of an integrator (109), the mechanical rotor angle (102) is formed and is fed to the means (17) for frequency analysis,
wherein in order to form additional torque portions (115), auxiliary signals (113) for frequency analysis are respectively multiplied by the input signal (8) and are subsequently integrated, in order to be then multiplied again by the respective same auxiliary signals (113) as before, wherein the auxiliary signals (113) are formed from sine and cosine values of the mechanical rotor angle (102) and its multiples,
wherein the total of the additional torque portions are fed to a proportional member (114), from which an additional torque target value (106) results,
wherein the additional torque target value (106) corresponds to the output signal (10) of the control device (1),
wherein the additional torque target value (106) is overlaid negatively onto a target torque (104) and is fed as the overall target torque (110) to a converter control system (14) of a converter (3).

2. Method according to claim 1,
**characterised in that**, for regulation of a motor rotary speed, a motor controller (5) is used which as input variables receives, as the actual value, a rotary speed signal (101) from the electric motor (4) and as the target value, a rotary speed target value (105), wherein as the output signal, the motor controller (5) generates the torque target value (104).

3. Control device (1) for carrying out the method according to claim 1 or 2 to reduce electrical malfunctions in a network (2) caused by torque fluctuations of at least one electric motor (4), wherein the control device (1) comprises
- at least one first input (7) for supplying an input signal (8),
- at least one further input (11) for supplying a further input signal (12) which contains mechanical information derived from the electric motor (4), in particular regarding the rotary speed and/or the rotor angle,
and
- at least one output (9) for outputting an output signal (10) to the converter (3) supplying the electric motor (4) wherein, by means of the control system of the control device (1), at least one output signal (10) from the input signal (8) can be generated and said signal can be made available to the converter (3) supplying the electric motor (4),
wherein the input signal (8) can be formed from a power signal (112), wherein the power signal (112) can be generated from information (103) at the electric motor (4) through means (111) for power determination and wherein by means of a highpass filter (15), the low frequency components can be removed, wherein the further input signal (12) represents a rotary speed signal (101) from which, with the aid of an integrator (109), the mechanical rotor angle (102) can be formed and can be fed to the means (17) for frequency analysis,
wherein in order to form additional torque portions (115), auxiliary signals (113) for frequency analysis can be respectively multiplied by the input signal (8) and can be subsequently integrated, in order to be able to be then multiplied again by the respective same auxiliary signals (113) as before, wherein the auxiliary signals (113) can be formed from sine and cosine values of the mechanical rotor angle (102) and its multiples,
wherein the total of the additional torque portions can be fed to a proportional member (114), such that an additional torque target value (106) results,
wherein the additional torque target value (106) corresponds to the output signal (10) of the control device (1),
wherein the additional torque target value (106) can be overlaid negatively onto a target torque (104) and can be fed as the overall target torque (110) to a converter control system (14) of a converter (3).

4. System having at least one electric motor supplied by a converter (3) and at least one control device (1) according to claim 3.

5. System according to claim 4,
**characterised in that** the system has at least one motor controller (5).

## Revendications

1. Procédé de suppression de perturbation électrique, notamment de scintillement, dans un réseau au moyen d'un dispositif (1) de régulation, dans lequel un convertisseur (3) relié au réseau (2) alimente un moteur (4) électrique,
dans lequel le dispositif (1) de régulation a
- au moins une première entrée (7) pour l'arrivée d'un signal (8) d'entrée,
- au moins une autre entrée (11) pour l'arrivée d'un autre signal (12) d'entrée qui contient des informations mécaniques déduites du moteur (4) électrique, notamment sur la vitesse de rotation et/ou l'angle du rotor et
- au moins une sortie (9) pour l'envoi d'un signal (10) de sortie au convertisseur (3) alimentant le moteur (4) électrique, dans lequel la régulation du dispositif (1) de régulation produit, à partir du signal (8) d'entrée, au moins un signal (10) de sortie et le met à disposition du convertisseur (3) alimentant le moteur (4) électrique,
dans lequel on forme le signal (8) d'entrée à partir d'un signal (11) de puissance dans lequel on produit le signal (112) à partir d'informations (103) sur le moteur (4) électrique par des moyens (111) de détermination de puissance, et dans lequel on élimine les composants de basse fréquence au moyen d'un filtre (15) passe eau,
dans lequel l'autre signal (12) d'entrée représente un signal (101) de vitesse de rotation à partir duquel on forme à l'aide d'intégrateur (109) l'angle (112) mécanique du rotor et que l'on envoie à des moyens (17) d'analyse de fréquence,
dans lequel, pour former des composantes (115) de couples supplémentaire, on multiplie des signaux (113) auxiliaires pour l'analyse de fréquence respectivement par le signal (8) d'entrée, on les intègre ensuite pour à nouveau les multiplier comme auparavant par les mêmes signaux (113) auxiliaires, dans lequel les signaux (113) auxiliaires, à partir de valeurs sinus et cosinus de l'angle (102) du rotor mécanique et de ses multiples,
dans lequel on envoie la somme des composantes de couples supplémentaires à un élément (114) proportionnel dont on obtient une valeur (106) de consignes de couples supplémentaires,
dans lequel la valeur (106) de couples supplémentaires correspond au signal (10) de sortie du dispositif (1) de régulation,
dans lequel on superpose négativement la valeur (106) de consignes de couples supplémentaires à un couple (104) de consignes et on l'envoie comme au couple (110) de consignes globales à une régulation (14) d'un convertisseur (3).

2. Procédé suivant la revendication 1,
**caractérisé en ce que**, pour réguler une vitesse de rotation du moteur, on utilise un régleur (5) de moteur qui reçoit comme grandeurs d'entrée comme valeur réelle le signal (101) de vitesse de rotation du moteur (4) électrique et comme valeur de consignes une valeur (105) de consignes de vitesse de rotation de régleur (5) du moteur produisant la valeur (104) de consignes de coupe de rotation comme signal de sortie.

3. Dispositif (1) de régulation pour effectuer le procédé suivant la revendication 1 ou 2 afin de réduire des perturbations électriques dans un réseau (2) qui sont provoquées par des fluctuations de couple d'au moins un moteur (4) électrique, le dispositif (1) de régulation ayant
- au moins une première entrée (7) pour l'arrivée d'un signal (8) d'entrée,
- au moins une autre entrée (11) pour l'arrivée d'un autre signal (12) d'entrée qui contient des informations mécaniques déduites du moteur (4) électrique, notamment sur la vitesse de rotation et/ou sur l'angle du rotor
et
- au moins une sortie (9) pour l'envoi d'un signal (10) de sortie au convertisseur (3) alimentant le moteur (4) électrique,
dans lequel on peut produire au moyen de la régulation du dispositif (1) de régulation, à partir du signal (8) d'entrée, au moins un signal (10) de sortie et le mettre à disposition du convertisseur (3) alimentant le moteur (4) électrique,
dans lequel on peut former le signal (8) d'entrée à partir d'un signal (112) de puissance, le signal (112) de puissance pouvant être produit à partir d'informations (103) sur le moteur (4) électrique par des moyens (111) de détermination de puissance et dans lequel les composantes de basses fréquences peuvent être éliminées au moyen d'un filtre (15) passe eau,
dans lequel l'autre signal (12) d'entrée représente un signal (101) de vitesse de rotation, à partir duquel l'angle (102) du rotor mécanique peut, à l'aide d'un intégrateur (109), être formé et être envoyé au moyen (17) d'analyse de fréquence,
dans lequel, pour former des composantes (115) de couples supplémentaires des signaux (13) auxiliaires pour l'analyse de fréquence peuvent être multipliés respectivement par le signal (8) d'entrée, ensuite être intégrés pour à nouveau être multipliés par les mêmes signaux (113) auxiliaires qu'auparavant, les signaux (113) auxiliaires pouvant être formés à partir de valeurs sinus et cosinus de l'angle (102) de rotor mécanique et de ses multiples,
la somme des composantes de couples supplémentaires pouvant être envoyée à un élément (114) proportionnel de manière à obtenir une valeur (106) de consignes de couples supplémentaires,
la valeur (106) de consignes de couples supplémentaires correspondant au signal (10) de sortie du dispositif (1) de régulation,
dans lequel la valeur (106) de consigne de couples supplémentaires peut être superposée négativement à un couple (104) de consigne et peut être envoyée comme couple (110) de consignes globales à une régulation (14) d'un convertisseur (3).

4. Système ayant au moins un moteur (4) électrique alimenté par un convertisseur (3) et ayant au moins un dispositif (1) de régulation suivant la revendication 3.

5. Système suivant la revendication 4,
**caractérisé en ce que** le système a au moins un régleur (5) de moteur.
